Europäisches Patentamt

European Patent Office

Office européen des brevets

(11) Veröffentlichungsnummer: **0 051 776**
A2

## (12) EUROPÄISCHE PATENTANMELDUNG

(21) Anmeldenummer: **81108791.5**

(51) Int. Cl.³: **G 01 G 21/28**, G 01 G 21/30

(22) Anmeldetag: **23.10.81**

(30) Priorität: **06.11.80 DE 3041872**

(71) Anmelder: **CARL SCHENCK AG,**
**Landwehrstrasse 55 Postfach 40 18, D-6100 Darmstadt**
**(DE)**

(43) Veröffentlichungstag der Anmeldung: **19.05.82**
**Patentblatt 82/20**

(72) Erfinder: **Garvens, Dieter,**
**Bürgermeister-Lang-Strasse 15, D-6102 Pfungstadt (DE)**
Erfinder: **Törner, Ludger, Ing. grad., Ketteler Strasse 23,**
**D-6116 Eppertshausen (DE)**

(74) Vertreter: **Brand, Fritz, Dipl.-Ing., Carl Schenck AG**
**Patentabteilung Landwehrstrasse 55 Postfach 4018,**
**D-6100 Darmstadt (DE)**

(84) Benannte Vertragsstaaten: **AT BE CH DE FR GB IT LI LU**
**NL SE**

(54) **Balganordnung für einen Waagenbehälter.**

(57) Die Erfindung bezieht sich auf eine Balganordnung für Waagenbehälter. Derartige Balganordnungen müssen einerseits flexibel genug sein, um keinen Kraftnebenschluß zu bilden. Anderseits müssen sie eine hinreichende Festigkeit aufweisen, insbesondere auch druckstoßfest sein, beispielsweise wird eine Druckstoßfestigkeit von 10 bar Überdruck verlangt. Erfindungsgemäß besteht eine derartige Balganordnung aus einem hochreißfesten Gewebe (21), das auf beiden Seiten beschichtet ist. Die innere Beschichtung des hochreißfesten Gewebes (21) besteht aus einer mit dem Gewebe (21) verklebten Silikonfolie (20), die äußere Beschichtung aus einer Silikonbeschichtung (22). Das hochreißfeste Gewebe (21) ist diagonal verarbeitet, es geht einstückig vom zylinderförmigen Teil des Verbindungsbalges in flanschartige Anschlußteile (2) über, die der Verbindungsbalg auf beiden Seiten aufweist. Diese Anschlußflansche (2) weisen eine wulstartige Verstärkung (3) am Umfang auf. Diese ist zweckmäßigerweise eine mit dem hochreißfesten Gewebe (21) verklebte Silikonschnur (4).

Balganordnung für einen Waagenbehälter

Die Erfindung betrifft eine Balganordnung für einen Waagenbehälter in druckstoßfester, flexibler und temperaturbeständiger Ausführung, mit Verbindungselementen zur Verbindung des Einlaufs zum und des Austrags vom Waagenbehälter mit fest angeordneten Bauteilen, wobei der Verbindungsbalg aus einem beiderseits beschichteten, hochreißfesten Gewebe besteht.

Beim Einsatz von Wägeeinrichtungen in Kohlenstaubanlagen oder bei Stäuben, die zu Explosionen neigen, ist es aus sicherheitstechnischen Gründen erforderlich, die Waagen und die notwendigen flexiblen Verbindungen am Waageneinlauf und am Austrag in explosionsdruckstoßfester Ausführung, z.B. entsprechend einem Explosionsdruck von maximal 1o bar Überdruck bei einer Kohlenstaubexplosion auszulegen. Die flexiblen Balgverbindungen müssen daher eine entsprechende Festigkeit aufweisen. Sie müssen andererseits aber auch Kraftnebenschlüsse gleich welcher Art weitestgehend von der Waage fernhalten, damit die wägetechnischen Bedingungen erfüllt sind und genaue Wägeergebnisse erzielt werden.

Da die Waagen, insbesondere Dosierwaagen, gewöhnlich in Gerüstkonstruktionen mit großvolumigen Vorratsbehältern eingebaut werden, ist es auch Aufgabe der flexiblen Verbindung, die durch unterschiedliche Belastungen entstehenden Durchbiegungen mit Setzungserscheinungen zur Waage nicht als störende Kraftkomponente auf die Waage einwirken zu lassen.

Darüberhinaus sollen die flexiblen Balgverbindungen am Waagenbehälter auch eine hohe Temperaturbeständigkeit aufweisen und z.B. für Temperaturen bis 2oo$^{\circ}$C geeignet sowie gas- und flüssigkeitsdicht sein.

Bekannt sind Kompensatoren verschiedener Ausführung, z.B. Metallkompensatoren und Gummikompensatoren (Faltenbalgsysteme), Stoffmanschetten und Membranen. Eine bekannte Balganordnung besteht z.B. aus einem beiderseits beschichteten, hochreißfesten Gewebe und weist zylindrische Endabschnitte bzw. Anschlußteile auf. Die Befestigung eines solchen Balges ist jedoch sehr aufwendig. Für höhere Drücke ist die Anordnung nicht geeignet, da sich die Bälge an den Anschlußstellen lösen und undicht werden. Alle bisher bekannten Anordnungen erfüllen nicht die Anforderungen, die an Verbindungsbälge für Waagenbehälter für Drücke bis 1o bar und eine Temperaturbeständigkeit bis ca. 2oo°C zu stellen sind.

Aufgabe der vorliegenden Erfindung ist es, eine Balganordnung für einen Waagenbehälter zu schaffen, die die oben genannten Forderungen erfüllt und die kostengünstig herzustellen ist. Diese Aufgabe wird durch die in den Patentansprüchen angegebenen Merkmale gelöst. Die weiteren Ansprüche erfassen zweckmäßige und vorteilhafte Ausgestaltungen der Erfindung.

Die erfindungsgemäße Anordnung zeichnet sich durch eine besonders hohe Flexibilität aus. Bei einer im Versuch geprüften Ausführung betrug der Kraftnebenschluß z.B. 1oog/mm über 1o mm Weg im Normalbetrieb (ohne Beaufschlagung durch Explosionsdruck). Die gleiche Anordnung wies bei einem Explosionstest eine Explosionsdruckstoßfestigkeit von mindestens 1o bar Überdruck auf. Sie war zudem gasdicht bis zu einem Überdruck von mindestens 1o bar. Weiterhin wurde eine hohe Temperaturbeständigkeit von über 2oo°C nachgewiesen.

Die hohe Flexibilität bei gleichzeitig hoher Festigkeit der Balganordnung wird besonders durch die Diagonalverarbeitung des hochreißfesten Gewebes ermöglicht. Hierdurch wird auch eine etwa gleichmäßige Spannungsverteilung im Gewebe erzielt. Darüberhinaus wird die Ausbildung von flanschartigen Anschlußteilen ermöglicht bzw. erleichtert. Die Anschlußflansche des Verbindungsbalges gewährleisten eine einfache Befestigung und einen sicheren, gasdichten Sitz. Die Silikonfolie und die Silikonbeschichtung des Gewebes sichern die Gasdichtheit, schützen das Gewebe gegen Beschädigungen von außen und lassen hohe Temperaturen zu.

Die Erfindung wird an einem Ausführungsbeispiel in den Zeichnungen dargestellt und nachstehend in der Beschreibung näher erläutert. Es zeigen

Fig. 1    Balganordnung für einen Waagebehälter mit flanschartigen Anschlüssen

Fig. 2    Balgaufbau eines Verbindungsbalges (Ausschnitt)

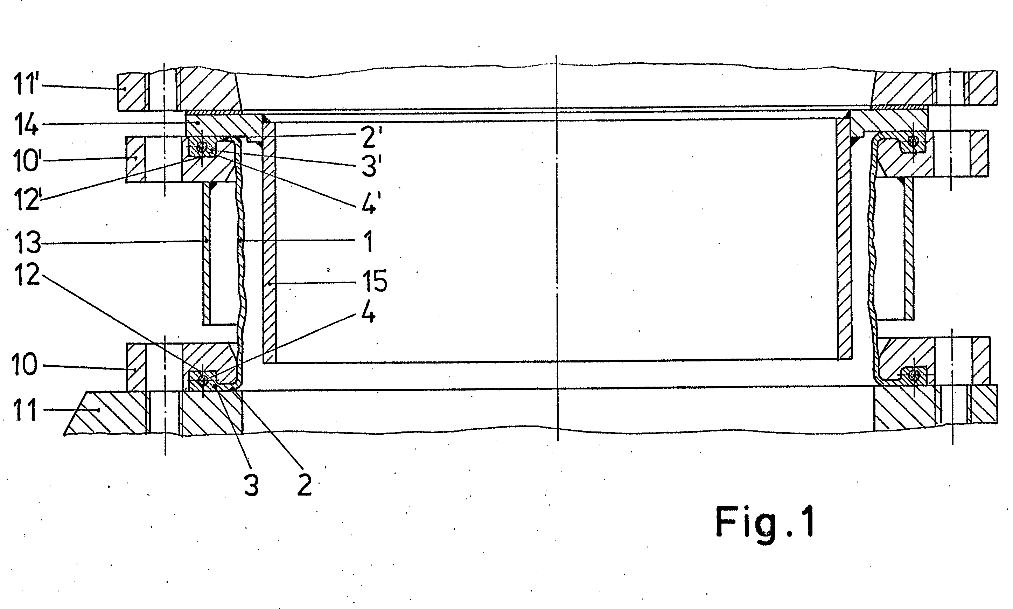

In Fig. 1 ist der schlauchförmige Verbindungsbalg 1 auf beiden Seiten mit flanschartigen Anschlußteilen (Anschlußflanschen) 2, 2' versehen. Die Anschlußflansche weisen wulstartige Verstärkungen 3, 3' auf. In den Verstärkungen 3, 3' ist jeweils eine Silikonschnur 4, 4' eingebettet.

Der Verbindungsbalg 1 ist über als Planflansche ausgebildete Ringflansche 1o, 1o' mit Gegenflanschen 11, 11' beispielsweise verschraubt. Die Ringflansche 1o, 1o' weisen Ringnuten 12, 12' auf, in denen die wulstartigen Verstärkungen 3, 3' der Anschlußflansche 2, 2' aufgenommen werden. Die Anschlußflansche 2, 2' wirken hierbei gleichzeitig als Dichtungen zwischen den zu verbindenden Teilen, so daß besondere Dichtelemente entfallen können. Die Ringflansche 1o, 1o' können auch geteilt ausgeführt werden.

Am Ringflansch 1o' ist ein äußerer Ringmantel 13 angeordnet und z.B. durch Schweißen fest mit dem Ringflansch 1o' verbunden. Der Ringmantel 13 dient zur Abstützung des Verbindungsbalges 1 bei hoher Druckbeanspruchung. Am Ringmantel

0051776

13 kann sich der Verbindungsbalg 1 z.B. im Fall eines Explosionsdruckstoßes anlegen. Dadurch wird eine übermäßige
Beanspruchung, insbesondere in tangentialer Richtung, oder
eine Beschädigung des Verbindungsbalges 1 im Störfall vermieden. Der Ringmantel 13 weist einen Axialspalt zum Ringflansch 1o auf, so daß die Beweglichkeit der Balganordnung
nicht behindert wird.

Zwischen den Ringflansch 1o' und den Gegenflansch 11' ist
eine Zwischenscheibe 14 mit einem inneren Ringmantel 15 eingebaut. Der innere Ringmantel 15 verhindert, daß der Verbindungsbalg 1 direkt mit dem durch die Balganordnung geleiteten Material in Berührung kommt und schützt dadurch
den Balg vor unmittelbaren Beschädigungen. Der innere Ringmantel 15 kann anstatt an der Zwischenscheibe 14 auch am
Gegenflansch 11' angeordnet werden.

Bei Einbau der Balganordnung nach Fig. 1 am Einlauf eines
Waagenbehälters ist beispielsweise der Gegenflansch 11' mit
dem festen (stationären) Teil der Gesamtkonstruktion verbunden, während sich der Gegenflansch 11 an dem auf einer
Wägeeinrichtung beweglich abgestützten und nicht näher dargestellten Waagenbehälter befindet. Der Balg 1 verbindet
also den festen Teil der Gesamtanlage mit dem beweglichen
Waagenbehälter. Eine ähnliche Anordnung kann auch am Auslauf des Waagenbehälters vorgesehen werden.

Durch die beschriebene Balgverbindung werden die Bewegungen des Waagenbehälters nicht behindert bzw. elastische
Verformungen der Anschlußkonstruktion aufgefangen, so daß
Störeinflüsse von der Waage weitgehend ferngehalten werden.
Hierbei ist zu erwähnen, daß die Verbindungsflansche und
die Balgverbindung auch die im Fall einer Explosion auftretenden und auf die flexible Verbindung einwirkenden
Zugkräfte aufnehmen.

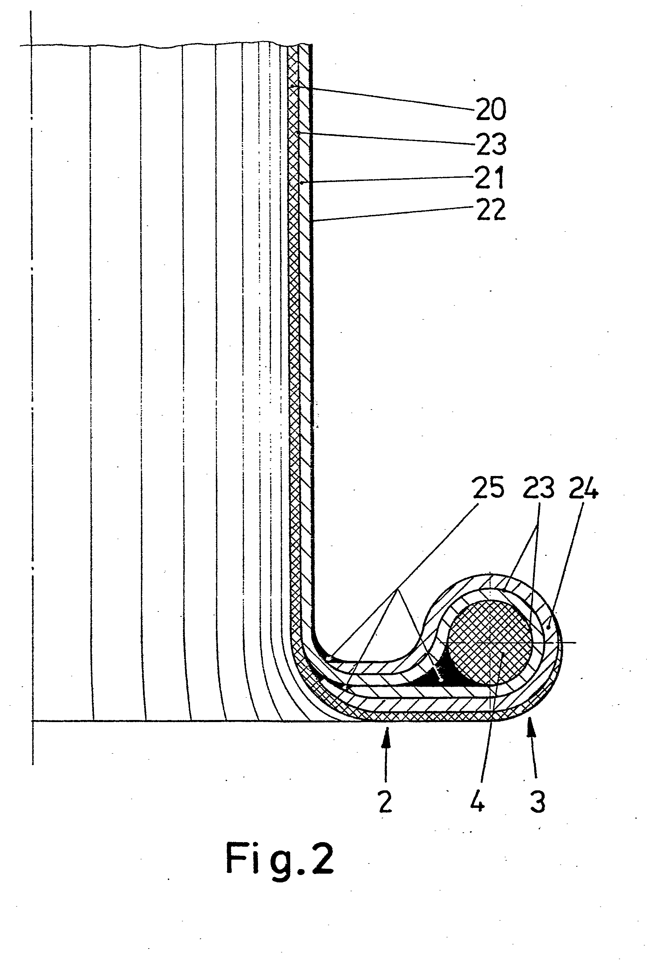

Fig. 2 zeigt ausschnittsweise den Balgaufbau eines erfindungsgemäßen schlauchartigen Verbindungsbalges für einen Waagenbehälter. Der Verbindungsbalg weist auf der Innenseite eine Silikonfolie 2o auf, die mit einem hochreißfesten und temperaturbeständigen Grundgewebe 21 verklebt ist. Auf der Außenseite des Gewebes 21 ist eine Silikonbeschichtung 22 aufgebracht.

Das Grundgewebe 21 ist diagonal verarbeitet, d.h. die unter einem Winkel von 9o$^o$ zueinander verlaufenden Fäden des Gewebes (Kette und Schuß) bilden mit der Längsachse des Balgs einen Winkel von jeweils 45$^o$. Dadurch ist eine hohe Flexibilität bei Normalbetrieb sowie eine hohe Belastbarkeit bei Druckbeanspruchung gewährleistet. Gleichzeitig wird es möglich, das Grundgewebe vom zylindrischen Teil des Balg's nahtlos und ohne Unterbrechung in den Anschlußflansch 2 zu überführen.

Am Anschlußflansch 2 ist die wulstartige Verstärkung 3 erkennbar, die im wesentlichen durch eine Silikonschnur 4 gebildet wird. Die Silikonschnur ist vom Grundgewebe 21 sowie von weiteren Gewebeeinlagen 24 umgeben, wobei alle Teile miteinander verklebt sind. Die Verklebungen sind als Silikonverklebungen 23 ausgeführt. Vorhandene Hohlräume sind mit einer Silikonfüllung 25 versehen.

0051776

Patentansprüche:

1. Balganordnung für einen Waagenbehälter in druckstoßfester, flexibler und temperaturbeständiger Ausführung, mit Verbindungselementen zur Verbindung des Einlaufs zum und des Austrags vom Waagenbehälter mit fest angeordneten Bauteilen, wobei der Verbindungsbalg aus einem beiderseits beschichteten, hochreißfesten Gewebe besteht, gekennzeichnet durch folgende Merkmale:

die innere Beschichtung des hochreißfesten Gewebes (21) besteht aus einer Silikonfolie (2o), die mit dem Gewebe (21) verklebt ist,

die äußere Beschichtung besteht aus einer Silikonbeschichtung (22),

das hochreißfeste Gewebe (21) ist diagonal verarbeitet,

der Verbindungsbalg (1) weist auf beiden Seiten flanschartige Anschlußteile (Anschlußflansche) (2, 2') mit einer wulstartigen Verstärkung (3, 3') am Umfang auf,

das hochreißfeste Gewebe (21) geht einstückig vom zylinderförmigen Teil des Verbindungsbalges (1) in die flanschartigen Anschlußteile (2, 2') über.

2. Balganordnung nach Anspruch 1, dadurch gekennzeichnet, daß die wulstartige Verstärkung (3, 3') eine Silikonschnur (4, 4') aufweist, die von dem hochreißfesten Gewebe (21) sowie von miteinander verklebten Einlagen (24) des Gewebes (21) umgeben ist, wobei die Einlagen (24) auch die flanschartigen Anschlußteile (2, 2') verstärken.

3. Balganordnung nach Anspruch 1 oder 2, dadurch gekennzeichnet, daß die Verklebungen als Silikonverklebungen (23) ausgeführt sind.

0051776

4. Balganordnung nach Anspruch 1, dadurch gekennzeichnet, daß der Verbindungsbalg (1) innen und außen von je einem an Verbindungselementen (1o', 14) angeordneten festen Ringmantel (13, 15) umgeben ist, wobei der äußere Ringmantel (13) zur Abstützung des Balgs (1) bei hoher Druckbeanspruchung dient.

5. Balganordnung nach Anspruch 1, dadurch gekennzeichnet, daß der Verbindungsbalg (1) an den flanschartigen Anschlußteilen (2, 2') durch zwei mit Ringnuten (12, 12') versehene Planflansche (Ringflansche) (1o, 1o') klemmbar und an Gegenflanschen (11, 11') befestigbar ist.

Fig.1

0051776

Fig.2